# EUROPEAN PATENT APPLICATION

(11) **EP 0 824 960 A1**
(43) Date of publication of application: **25.02.1998**
(21) Application number: 96913703.3
(22) Date of filing: 08.05.1996
(51) Int. Cl.: B01D 71/68, B01D 69/08, D01D 5/24

(54) **HOLLOW-FIBER MEMBRANE OF POLYSULFONE POLYMER AND PROCESS FOR THE PRODUCTION THEREOF**

(30) Priority: 09.05.1995 JP 110531/95
(71) Applicant: TEIJIN LIMITED, Osaka-shi, Osaka 541 (JP)
(72) Inventor: MIZUTANI, Shoji, c/o Teijin Limited, Iwakuni-shi, Yamaguchi 740 (JP)
(74) Representative: Votier, Sidney David
(86) International application number: JP9601218
(87) International publication number: WO9635504

(57) **Abstract**

A process in which a spinning stock solution containing a polysulfone-based polymer is discharged into air from a tube-in-orifice nozzle and then passed through a coagulating solution and desolvated to produce a hollow fiber separating membrane, comprising spinning a polysulfone-based polymer spinning stock solution containing 5-30 wt% of the polysulfone-based polymer, 5-20 wt% of polyvinylpyrrolidone and 2-8 wt% of water in terms of total weight, dissolved in a polar organic solvent, at a nozzle temperature of 20-60°C. The process gives a polysulfone-based polymer hollow fiber membrane which has a spongy structure for the membrane as a whole, a 0.05-0.3 µm thick dense layer on at least either one of the inner surface or the outer surface thereof, and an ultrafiltration rate of 500-800 ml/hr·mmHg·m², a dextran 10,000 cutoff of 30% or lower and a dextran 70,000 cutoff of 80% or higher.

## Description

### Technical Field

The present invention relates to a polysulfone-based polymer hollow fiber separating membrane and to a process for producing it. More specifically, the present invention relates to a selectively permeable hollow fiber separating membrane composed of a polysulfone-based polymer, which has excellent fluid separating properties, excellent strength and excellent handleability, as well as to a process for producing the separating membrane in a highly efficient manner.

### Background Art

Polysulfone-based polymers known as engineering plastics have excellent mechanical properties, heat resistance, chemical resistance and microbial resistance, and for this reason they have been applied to a wide range of practical uses in a variety of fields, from electronic parts and household appliances to separating membranes for separation and purification of colloidal substances and proteins, for electrodeposition paint bath control, production of highly purified water for the electronics industry, in the atomic power industry and for desalination of seawater, as well as for medical instruments for blood purification, etc. with artificial kidneys.

Because polysulfone-based polymers are well suited for spinning into hollow fibers, they can be used in hollow fiber membranes for artificial kidneys. Hollow fiber membranes made of polysulfone-based polymers are particularly suitable for efficient removal of the low molecular protein β₂-microglobulin, which is believed to be one of the causative substances of dialysis amyloidosis, one of the recently studied long-term complications of dialysis.

As processes for producing hollow fiber membranes made of polysulfone-based polymers there are known the processes described in, for example, Japanese Unexamined Patent Publications No. 54-145379 (U.S. Patent Nos. 4,286,015 and 4,351,860), No. 58-156018 (U.S. Patent No. 4,822,489), No. 59-189903 (U.S. Patent No. 4,612,119) and No. 61-93801 (U.S. Patent No. 4,906,375). These processes involve dissolving polysulfone resins in organic solvents such as dimethylacetamide (DMAc), dimethylformamide (DMF), N-methyl-2-pyrrolidone (NMP), dioxane (DOX) and tetramethylurea (TMU) to prepare spinning stock solutions, and discharging the stock solutions together with pre-mixing coagulating solutions from double-barrel nozzles into aqueous baths, to prepare hollow fiber separating membranes with fine porous structures.

### Disclosure of the Invention

However, the polysulfone-based polymer hollow fiber membranes obtained by these production processes are still in need of improvement for β₂-microglobulin removal performance when seeking to minimize loss of albumin during dialysis. There also exists the problem of low spinning productivity. Here, it is an object of the present invention to provide a process for producing hollow fibers with the properties required of high-performance artificial kidneys, specifically excellent permeability to β₂-microglobulin without impairing the fractionating molecular weight or mechanical properties, as well as a polysulfone-based polymer hollow fiber membrane which gives this excellent performance.

In light of the circumstances described above, the present inventors have conducted much diligent study and research aimed at overcoming the aforementioned problems, and as a result we have completed the present invention upon successfully obtaining a polysulfone-based polymer hollow fiber membrane with sharp molecular weight fractionating properties and β₂-microglobulin permeability, by a process in which a spinning stock solution containing a polysulfone-based polymer is discharged into air from a tube-in-orifice nozzle and then passed through a coagulating solution and desolvated to produce a hollow fiber separating membrane, which comprises spinning a polysulfone-based polymer spinning stock solution containing 5-30 wt% of the polysulfone-based polymer, 5-20 wt% of polyvinylpyrrolidone and 2-8 wt% of water in terms of total weight, dissolved in a polar organic solvent, at a nozzle temperature of 20-60°C. Here, the fractionating molecular weight is the molecular weight of a permeating substance with a given molecular weight when 50% permeation of that substance occurs through the separating membrane.

### Brief Description of the Drawings

Fig. 1 is a cross-sectional transmission electron micrograph of a polysulfone-based polymer hollow fiber membrane obtained in an example.

Fig. 2 is a cross-sectional transmission electron micrograph of an embodiment of a conventional polysulfone-based polymer hollow fiber membrane.

Fig. 3 is a cross-sectional transmission electron micrograph of another embodiment of a conventional polysulfone-based polymer hollow fiber membrane.

Fig. 4 is a cross-sectional transmission electron micrograph of yet another embodiment of a conventional polysulfone-based polymer hollow fiber membrane.

### Best Mode for Carrying Out the Invention

The polysulfone-based polymer used according to the present invention is preferably an aromatic polysulfone-based polymer containing -O- and -SO₂- bonds, and as representative examples there may be mentioned those with repeating units represented by the following general formulas (I) and (II). 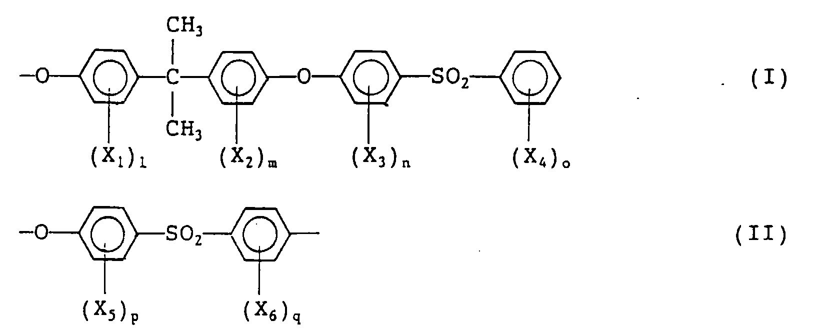 In formulas (I) and (II), X₁-X₆ represent non-dissociating substituents exemplified by alkyl groups such as methyl or ethyl and halogens such as chlorine or bromine, or dissociating substituents such as -COOH or -SO₃H; and l, m, n, o, p and q represent integers of 0-4.

Polysulfone-based polymers with l, m, n, o, p and q all equal to zero in the above formulas (I) and (II) are generally easy to obtain and are also preferred for use according to the invention. However, the polysulfone-based polymer used for the invention is not limited to these. Preferred among these are aromatic polysulfone-based polymers represented by formula (II), especially with p and q equal to zero.

The concentration of the polysulfone-based polymer in the spinning stock solution according to the invention is preferably 5-30 wt%, and especially 10-20 wt%. A concentration of the polysulfone-based polymer exceeding 30 wt% is not preferred because it increases the solution viscosity resulting in poorer handleability, while the ultrafiltration rate of the resulting hollow fiber membrane is lowered regardless of the composition of the polar organic solvent used. On the other hand, a polysulfone-based polymer concentration of less than 5 wt% is also not preferred because it results in lower mechanical strength of the hollow fiber membrane product. According to the invention, the water in the spinning stock solution is an indispensable constituent of the invention, and it is preferably present at 2-8 wt%, and more preferably 4-6 wt%, in the spinning stock solution containing the aforementioned polysulfone-based polymer.

If the amount of water in the spinning stock solution is less than 2 wt%, not only the substance permeability for β₂-microglobulin, etc., but also the mechanical strength of the hollow fibers will be lowered. Also, if the amount of water exceeds 8 wt% the solubility of the polysulfone-based polymer in the polar organic solvent is lowered, tending to result in gelation of the spinning stock solution and poor handleability.

As useful polar organic solvents for the invention there may be mentioned N-methylpyrrolidone, dimethylsulfoxide, dimethylacetamide and dimethylformamide.

The polyvinylpyrrolidone contained in the spinning stock solution is added to improve the compatibility of the polysulfone-based polymer with blood when it contacts blood, and it is said to improve the blood compatibility due to a microphase separation structure formed within the hollow fiber membrane structure by the hydrophobic polysulfone-based polymer and hydrophilic polyvinylpyrrolidone. The content thereof is generally preferred to be 5-20 wt%, and especially 6-12 wt%, in the spinning stock solution.

Conventional processes for preparing spinning stock solutions have generally employed a system wherein the polymer, solvent and additives are measured out, stirred and dissolved in a tank, and then filtered to remove the impurities prior to being degassed and supplied to spinning. Because this system is a batch system using a tank, it requires manpower and costly equipment. Depending on the nature of the dope, there may be concerns about changes in the properties thereof as time passes after dissolution, and thus another disadvantage is caused for provision of a uniform dope. According to the present invention it is possible to employ a system wherein preferably the polymer and solvent are each supplied at constant prescribed rates to a twin-screw extruder, dissolved and kneaded in the extruder, and then the stock solution is filtered with a filter. In such a system, the determination of quantities of starting materials, the dissolution, the filtration and the degassing may be carried out in a continuous manner, thus providing the advantage of increased productivity and workability, as well as excellent uniformity of the stock solution.

According to the present invention, the nozzle temperature during discharge of the polysulfone-based polymer spinning stock solution from the tube-in-orifice nozzle is preferably 20-60°C, and more preferably 30-50°C.

The nozzle temperature is preferably no lower than 20°C to prevent easy gelation of the spinning stock solution and an increased percentage of fiber breakage during spinning. On the other hand, if the temperature is higher than 60°C the viscosity of the spinning stock solution is lowered, thus resulting in disadvantages such as more difficulty in achieving stable spinning and larger thickness unevenness in the hollow fibers after coagulation.

Conventional systems for supplying stock solutions to spinning nozzles have achieved constant delivery by using one pump per nozzle hole, and this system uses more nozzles which increases the equipment volume and equipment costs. According to the present invention it is preferred in terms of equipment costs to employ a system wherein the stock solution is supplied with one pump for a plurality of nozzles, with a distributing jig used for even distribution to each nozzle.

Also, discharged hollow fibers have conventionally been coagulated into single filaments and then subjected to such steps as water washing and drying and handled as separate single filaments, but according to the present invention it is very advantageous and preferred from the standpoint of equipment cost and workability to use a system wherein the discharged filaments are solidified in the coagulating solution and then combined into multiple hollow fiber filaments before passing through the subsequent steps.

According to the process of the invention, the spinning stock solution prepared in the manner described above is discharged into the coagulating bath using a tube-in-orifice nozzle, for coagulation. The coagulating solution for the coagulating bath used here, i.e. the external coagulating solution, is preferably water, an alcohol such as methanol, ethanol, propanol, butanol, etc., an aqueous solution of one of these alcohols, or an aqueous solution of one of the polar organic solvents mentioned above for preparation of the spinning stock solution.

In addition, an internal coagulating solution used for the hollow portions of the discharged hollow fibers is also preferably water, alcohol or an aqueous solution thereof, or an aqueous solution of a polar organic solvent.

Formation of the skin layer which exhibits the separating function of the membrane either on the inner surface or the outer surface of the hollow fiber may be accomplished by appropriate selection of the coagulating solutions for the internal coagulating solution and the external coagulating solution. Also, the temperature of the coagulating solution is usually 30-70°C, and preferably 30-50°C, when the coagulating solution is water or an aqueous solution.

The polysulfone-based polymer hollow fiber membrane of the invention which is obtained in this manner has a spongy structure for the membrane as a whole, and at least either one of the inner surface or the outer surface thereof has a dense layer (skin layer) about 0.05-0.3 µm thick, i.e. a surface section with a markedly different density and pore size than the Spongy structure section, and the substance permeability performance of the hollow fiber membrane has an ultrafiltration rate of 500-800 ml/hr·mmHg·m², a dextran 10,000 cutoff of 30% or lower and a dextran 70,000 cutoff of 80% or higher, with preferably a dextran 10,000 cutoff of 25% or lower and a dextran 70,000 cutoff of 85% or higher, and is characterized by having a high ultrafiltration rate and a sharp cutoff for medium high molecular weight substances. The dense layer of the polysulfone-based polymer hollow fiber membrane of the invention preferably has a thickness of 0.07-0.2 µm, and especially about 0.1 µm.

The membrane thickness of the hollow fiber membrane of the invention is preferred to be 20-50 µm, and especially 30-40 µm.

According to the invention, the thickness of the dense layer or skin layer was directly measured using a 15,000x magnification transmission electron micrograph of a cross-section of the hollow fibers.

The cutoff was measured by the following method. That is, after collecting 1,000 hollow fibers into a bundle about 20 cm in length and sealing both ends with a urethane resin, the bundle is cut to expose the center section of the hollow fibers, and a module is formed. A 0.1 wt% aqueous solution of dextran 70,000 (molecular weight 70,000) or dextran 10,000 (molecular weight 10,000) (stock solution) is passed over the hollow side of the hollow fibers of the module at an inflow rate of 200 ml/min for each, and the influx pressure of the aqueous dextran solution is controlled for a solution permeation rate of 10 ml/hr·m² through the hollow fiber membrane. The temperature of the aqueous solution at this time is 37°C ±1°C. When the aqueous solution permeation rate becomes constant (usually after 30 minutes), the permeated solution and the aqueous solution at the module inlet and outlet are sampled, the dextran concentrations thereof are measured by the anthronesulfuric acid method, and the cutoff (percentage by weight of dextran blocked from permeation) is calculated. The stock solution concentration for calculation of the cutoff is (module inlet concentration + outlet concentration of stock solution)/2.

The present invention will now be explained in more detail by way of examples, with the understanding that the invention is in no way limited thereby. Unless otherwise specified, the symbol "%" will refer to percent by weight.

### Example 1

A twin-screw extruder was used to dissolve and knead dimethylsulfoxide (DMSO) and dimethylacetamide (DMAc) as solvents, polyvinylpyrrolidone (PVP) and polyethersulfone with repeating units represented by (-O-φ-SO₂-φ-) (where φ is 1,4-phenylene) as polymers and water in a proportion of 41:30:9:15:5 %, and the resulting uniform solution was filtered and degassed. This spinning stock solution was then extruded through a tube-in-orifice nozzle (40°C) for hollow fiber production, and using 60% aqueous solutions of DMSO and DMAc (40°C) as internal and external coagulating solutions, the spinning stock solution was coagulated from the interior and exterior to spin a hollow fiber porous membrane. The distance from the nozzle to the external coagulating solution was 20 cm. The dimensions of the nozzle used were a core diameter of 0.15 mm, a peripheral torus thickness of 0.25 mm, a surrounding tube section (stock solution discharge outlet) thickness of 0.35 mm and a draft of 3.

The properties of the resulting hollow fibers were as follows.

Inner diameter: 200 µm, outer diameter: 280 µm, membrane thickness: 40 µm, ultrafiltration rate: 650 ml/m²·hr·mmHg, dextran 10,000 and dextran 70,000 cutoff [(stock solution concentration - permeating solution concentration)/(stock solution concentration)]: 20% and 88%, respectively.

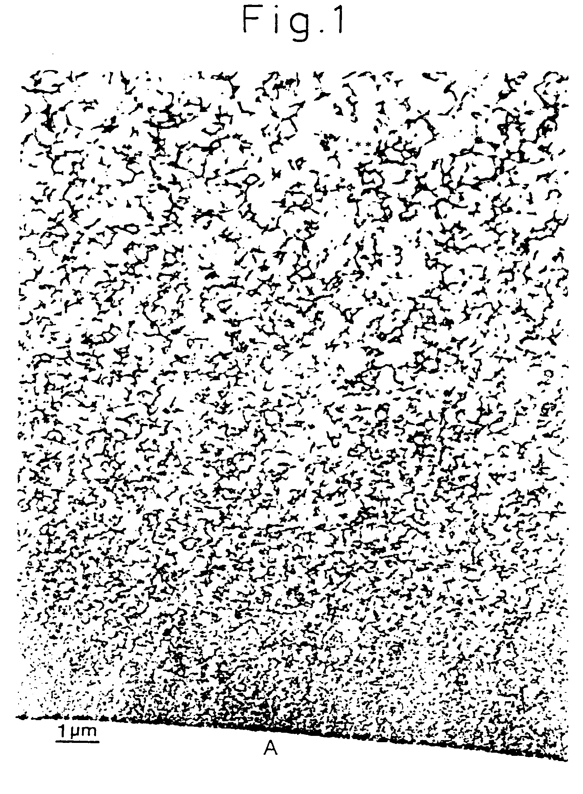

A cross-section of the resulting hollow fiber membrane was photographed with a transmission electron microscope at 15,000x magnification. The photograph is shown in Fig. 1. Here, "A" is the inner surface layer. However, Fig. 1 has been reduced to 70%, i.e. 10,500x magnification, due to the paper size. Fig. 1 shows that the hollow fiber membrane has a spongy structure as a whole, with formation of a dense skin layer with an inner surface thickness of about 0.1 µm.

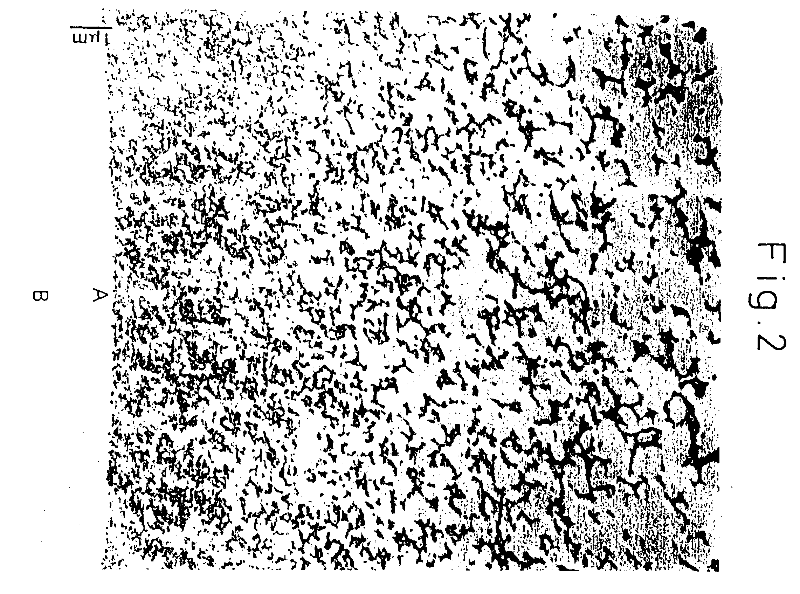

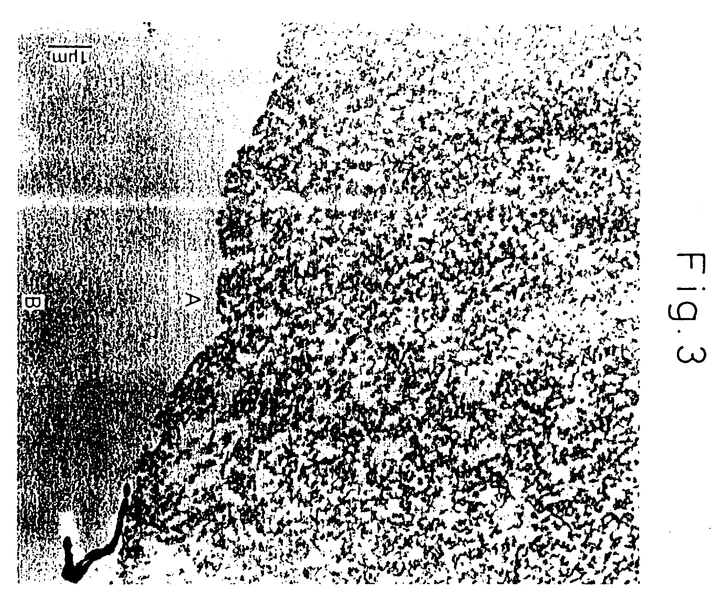

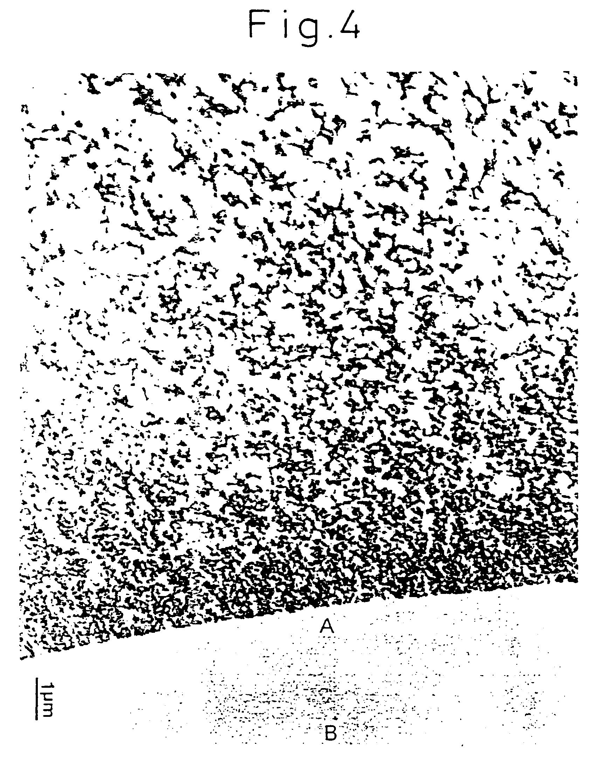

For comparison, transmission electron micrographs were taken at 15,000x magnification of the cross-section of a polysulfone-based polymer hollow fiber membrane used in a commercially available dialyzer by Kawasumi Chemical Industries, KK. (model name: PS-1.6 UW), a polysulfone-based polymer hollow fiber membrane used in a dialyzer by Asahi Medical, KK. (model name: APS-16) and a polysulfone-based polymer hollow fiber membrane used in a dialyzer by Toray, KK. (model name: Toraysulfone HF-1.8). These are shown in Figs. 2, 3 and 4 respectively, at 70% size (10,500x magnification). Here, "A" is the inner surface layer and "B" is the hollow section. These photographs show that the conventional polysulfone-based polymer hollow fiber membranes have no formation of a dense skin layer as seen in the polysulfone-based polymer hollow fiber membrane of the invention.

### Examples 2-4 and Comparative Examples 1-6

Hollow fiber spinning was carried out under the same conditions as in Example 1, but with variation in the spinning stock solution composition and the spinning nozzle temperature. Table 1 lists the spinning conditions and the properties of the resulting hollow fibers.

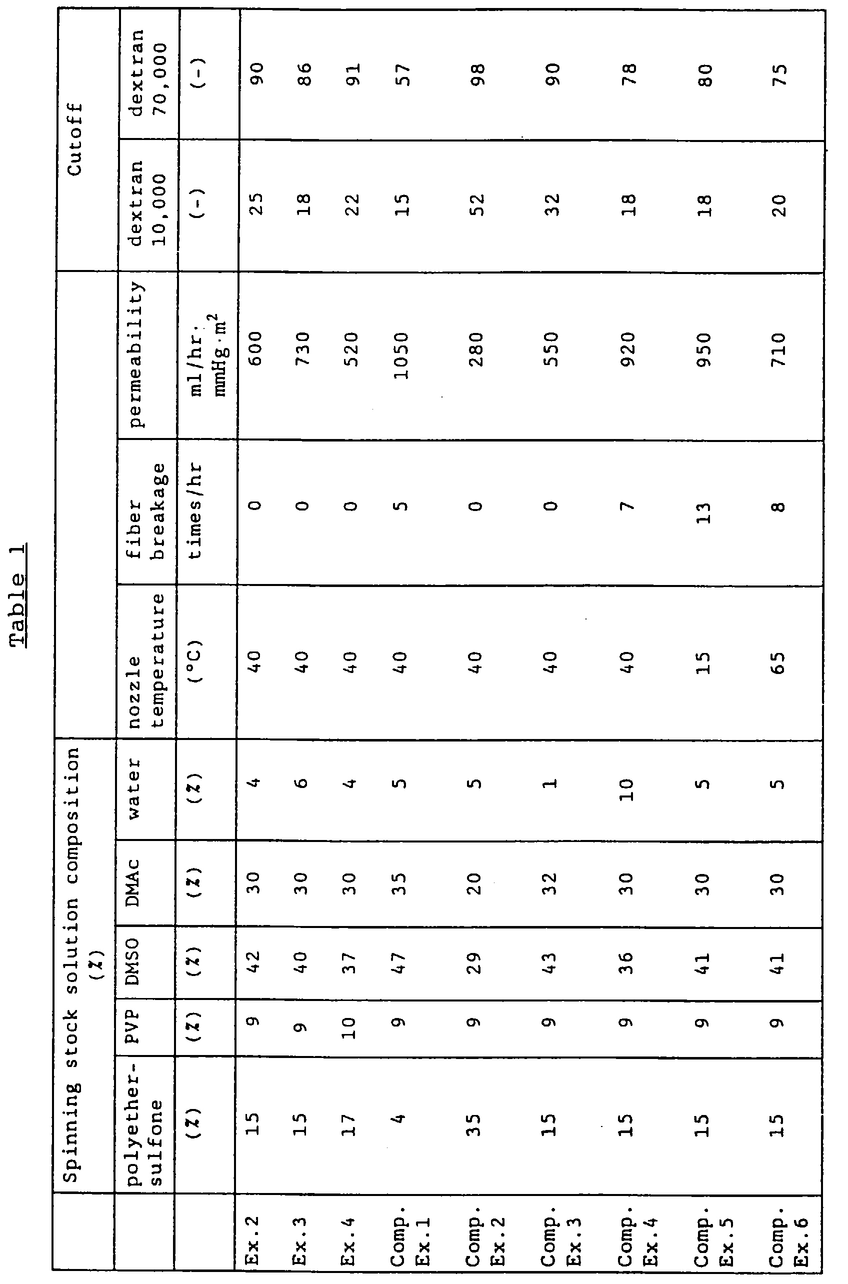

### Industrial Applicability

As explained above, the present invention provides a polysulfone-based polymer hollow fiber membrane with excellent handleability and productivity for hollow fiber spinning, giving hollow fiber membranes with satisfactory molecular weight fractionating properties which are highly useful as selectively permeable hollow fiber separating membranes.

## Claims

1. A process for producing a polysulfone-based polymer hollow fiber membrane in which a spinning stock solution containing a polysulfone-based polymer is discharged into air from a tube-in-orifice nozzle and then passed through a coagulating solution and desolvated to produce a hollow fiber separating membrane, which comprises spinning a polysulfone-based polymer spinning stock solution containing 5-30 wt% of the polysulfone-based polymer, 5-20 wt% of polyvinylpyrrolidone and 2-8 wt% of water in terms of total weight, dissolved in a polar organic solvent, at a nozzle temperature of 20-60°C.

2. The process of claim 1, wherein the polysulfone-based polymer is an aromatic polysulfone-based polymer containing -O- and SO₂- bonds.

3. The process of claim 2, wherein the polysulfone-based polymer is a polymer represented by the following formula (I) or (II). 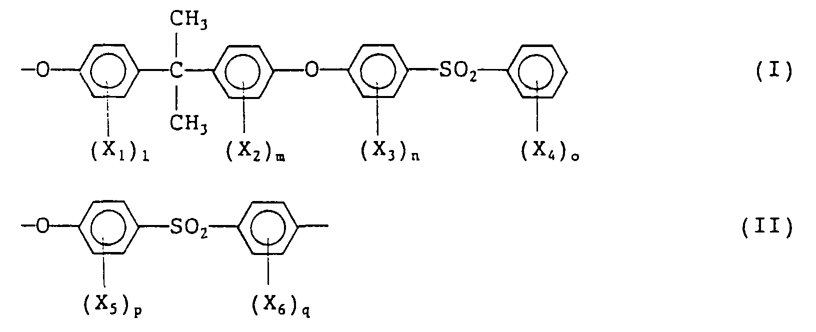 In formulas (I) and (II), X₁-X₆ represent non-dissociating substituents exemplified by alkyl groups such as methyl or ethyl and halogens such as chlorine or bromine, or dissociating substituents such as -COOH or -SO₃H; and l, m, n, o, p and q represent integers of 0-4.

4. The process of claim 1, wherein the method of preparing the polysulfone-based polymer spinning stock solution is a system employing a twin-screw extruder.

5. The process of claim 1, wherein the system accomplishes measurement of the spinning stock solution discharge rate for multiple nozzles.

6. The process of claim 1, wherein the discharged filaments from the nozzle are treated as bundles of said hollow fibers after coagulating and hardening.

7. A polysulfone-based polymer hollow fiber membrane which has a spongy structure for the membrane as a whole, which has a 0.05-0.3 µm thick dense layer on at least either one of the inner surface or the outer surface thereof, and which has an ultrafiltration rate of 500-800 ml/hr·mmHg·m², a dextran 10,000 cutoff of 30% or lower and a dextran 70,000 cutoff of 80% or higher.

8. A hollow fiber membrane according to claim 7, wherein the thickness of said dense layer is 0.07-0.2 µm.

9. A hollow fiber membrane according to claim 7, which has a membrane thickness of 20-50 µm.

10. A hollow fiber membrane according to claim 7, wherein the dextran 10,000 cutoff is 25% or lower and the dextran 70,000 cutoff is 85% or higher.
